# EUROPEAN PATENT SPECIFICATION

(11) **EP 0 879 265 B1**
(45) Date of publication and mention of the grant of the patent: **10.05.2000**
(21) Application number: 97904165.4
(22) Date of filing: 03.02.1997
(51) Int. Cl.: C08L 67/02

(54) **POLYESTER/POLYESTERAMIDE BLENDS**
POLYESTER/POLYESTERAMID MISCHUNGEN
MELANGES DE POLYESTER/POLYESTERAMIDE

(30) Priority: 05.02.1996 US 595460
(43) Date of publication of application: 25.11.1998
(73) Proprietor: EASTMAN CHEMICAL COMPANY, Kingsport, TN 37660 (US)
(72) Inventor: TURNER, Sam, Richard, Kingsport, TN 37660 (US); NICELY, Vincent, Alvin, Kingsport, TN 37660 (US)
(74) Representative: Evans, David Charles
(86) International application number: US9701638
(87) International publication number: WO9728218

(56) References cited:
- EP-A- 0 143 953
- RESEARCH DISCLOSURE, vol. 283, no. 006, 10 November 1987, HAVANT GB, pages 633-636, XP000027721 ANONYMOUSLY: "Polyester/Polyesteramide Blends"

## Description

### Technical Field

This invention relates to a polyester/polyesteramide blend having excellent gas barrier and improved flavor retaining properties and color. Certain polyethylene terephthalate/polyesteramide blends of the present invention also display reduced acetaldehyde concentration which highly improves the flavor and fragrance retaining properties without producing unacceptable haze or color.

### Background of the Invention

Polyethylene terephthalate (PET) is widely used for the production of light weight plastic articles due to PET's excellent mechanical properties such as formability, creep resistance and biaxial molecular orientability. However, during molding or extrusion processes, acetaldehyde is formed by thermal decomposition of the polyester and when the polyester is formed into an article, the acetaldehyde in the article's walls migrates into the contents of the article. Small amounts of acetaldehyde adversely affect the flavor retaining property of foods and beverages, and the fragrance retaining property of foods, beverages, cosmetics, and other package contents. For these reasons, it is desirable to minimize the migration of acetaldehyde into package contents.

Thermoplastic polyesters excellent in gas barrier properties have been proposed. For example, U.S. Patent No. 4,398,017 discloses a copolyester made from terephthalic acid and isophthalic acid as the acid component, and ethylene glycol and bis(2-hydroxyethoxy) benzene as the diol component. However, when such gas barrier polyester is used as a constituent material of a container, permeation of gases such as oxygen and carbon dioxide are controlled, but acetaldehyde migration into the food or beverage is not controlled, and thus, the flavor and fragrance of the content is effected.

The use of polyamides to increase the gas barrier properties in polyethylene terephthalate resins is disclosed in U.S. Patent Nos. 4,837,115; 4,052,481; and 4,501,781.

U.S. Patent No. 4,837,115 discloses a thermoplastic composition containing polyethylene terephthalate and high molecular weight polyamides which act to reduce the residual acetaldehyde contained in the polyester. U.S. Patent No. 4,837,115 teaches that terminal amino groups are a required component for the polyamides to be effective acetaldehyde scavengers. U.S. Patent No. 4,837,115 states that the molecular weight of the polyamide is not critical so far as the polyamide has a film-forming property. Such polyamides, therefore, must have high enough molecular weights to form a film. It is well known in the art that polyamides having molecular weights of at least 12,000 are necessary to form a film.

U.S. Patent No. 4,052,481, discloses a resin composition containing an aromatic copolyester, a polyamide and a polyalkylene phenylene ester or a polyalkylene phenylene ester ether. The aromatic copolyester contains terephthalic acid, isophthalic acid, and a bisphenol.

U.S. Patent No. 4,501,781 discloses a mixture containing 70 to 95 weight percent of a polyethylene terephthalate resin and 5 to 30 weight percent of a xylylene group-containing polyamide resin. U.S. Patent No. 4,501,781 does not mention acetaldehyde, however, it does state that in order to mold a container that has high gas barrier properties, the resin mixture material should have as close to 30% by weight of the xylylene group-containing polyamide resin to PET as possible. Furthermore, it states that the use of 5 to 10% by weight of the xylylene group-containing polyamide resin to PET will result in a container that does not have high gas barrier properties.

Japan Kokai Patent No. 5H0 64[1989]-24849 discloses blends of aliphatic polyamides in polyethylene terephthalate which provide reduced acetaldehyde after melt processing. Such blends will decrease the desired transparency of containers made from them.

The above mentioned patents are deficient because high molecular weight polyamides do not provide adequate reduction in residual acetaldehyde without imparting haze to the polyester. If small amounts of the high molecular weight polyamides are used in such patents, an acceptable level of haze can be achieved, however, residual acetaldehyde is very large. On the other hand, if larger amounts of the high molecular weight polyamides are used, residual acetaldehyde can be reduced but only at the expense of haze.

U.S. 5,258,233 discloses the use of low molecular weight polyamides to reduce acetaldehyde levels in PET based polyester without the formation of undesirable amounts of haze. However, it has been observed that the use of these low molecular weight polyamides can lead to undesirable yellow color.

We have unexpectedly discovered that polyesteramides, which have no terminal amino functionality, act as very efficient acetaldehyde reducers with the advantage of significantly less color formation. This is particularly desirable because high levels of color in food packaging is unacceptable. Moreover, in contrast to the polyamides, we have observed that high molecular weight polyesteramides are effective for acetaldehyde reduction.

### Summary of the Invention

The present invention provides semi-crystalline polyester compositions having improved flavor retaining properties, comprising:
I. 98 to 99.95 weight percent of a polyester which comprises
   (1) a dicarboxylic acid component comprising repeat units of terephthalic acid, naphthalene-2,6-dicarboxylic acid or mixtures of terephthalic acid and naphthalene-2,6-dicarboxylic acid,
   (2) a diol component comprising repeat units from at least 85 mole percent ethylene glycol,
   based on 100 mole percent dicarboxylic acid and 100 mole percent diol; and
II. 2 to 0.05 weight percent of a polyesteramide of the formula

   A(N)ₓ(D)_{y}

   where A is at least one dicarboxylic acid selected from aromatic or cycloaliphatic dicarboxylic acids having 8 to 14 carbon atoms or aliphatic dicarboxylic acids having 3 to 24 carbon atoms, N is at least one diamine having 2 to 24 carbon atoms, D is at least one diol having 2 to 14 carbon atoms, X is an integer from 0.01 to 0.99 and Y is an integer from 0.99 to 0.01.

The combined weights of the polyester in the blend and the polyesteramide in the blend total 100%.

### Description of the Invention

The polyester, component (I), of the present invention is a polyethylene terephthalate (PET) or polyethylene naphthalate (PEN) resin. Copolyesters and blends of PET and PEN can also be used. The polyethylene terephthalate resin contains repeat units from at least 85 mole percent terephthalic acid and at least 85 mole percent ethylene glycol, while the PEN resin contains repeat units from at least 85 mole percent 2,6-naphthalene-dicarboxlic acid and at least 85% ethylene glycol, based on 100 mole percent dicarboxylic acid and 100 mole percent diol.

The dicarboxylic acid component of the polyester may optionally be modified with up to 15 mole percent of one or more different dicarboxylic acids other than terephthalic acid or suitable synthetic equivalents such as dimethyl terephthalate. Such additional dicarboxylic acids include aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms. Examples of dicarboxylic acids to be included with terephthalic acid are: phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like. Examples of dicarboxlic acids to be included with naphthalene-2,6-dicarboxylic acid are phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like. Polyesters may be prepared from two or more of the above dicarboxylic acids.

It should be understood that use of the corresponding acid anhydrides, esters, and acid chlorides of these acids is included in the term "dicarboxylic acid".

In addition, the polyester, component (I), may optionally be modified with up to 15 mole percent, of one or more different diols other than ethylene glycol. Such additional diols include cycloaliphatic diols preferably having 6 to 20 carbon atoms or aliphatic diols preferably having 3 to 20 carbon atoms. Examples of such diols to be included with ethylene glycol are: diethylene glycol, triethylene glycol, 1,4-cyclohexanedimethanol, propane-1,3-diol, butane-1,2-diol, pentane-1,5-diol, hexane-1,6-diol, 3-methylpentanediol-(2,4), 2-methylpentanediol-(1,4), 2,2,4-trimethylpentane-diol-(1,3), 2-ethylhexanediol-(1,3), 2,2-diethylpropane-diol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethylcyclobutane, 2,2-bis-(3-hydroxyethoxyphenyl)-propane, and 2,2-bis-(4-hydroxypropoxyphenyl)-propane. Polyesters may be prepared from two or more of the above diols.

The polyethylene terephthalate resin may also contain small amounts of trifunctional or tetrafunctional comonomers such as trimellitic anhydride, trimethylolpropane, pyromellitic dianhydride, pentaerythritol, and other polyester forming polyacids or polyols generally known in the art.

Polyesters comprising substantially only terephthalic acid or dimethyl terephthalate and ethylene glycol residues are preferred in the case where the blends of the present invention are used in making thermoformed crystallized PET articles.

Polyethylene terephthalate based polyesters of the present invention can be prepared by conventional polycondensation procedures well-known in the art. Such processes include direct condensation of the dicarboxylic acid(s) with the diol(s) or by ester interchange using a dialkyl dicarboxylate. For example, a dialkyl terephthalate such as dimethyl terephthalate is ester interchanged with the diol(s) at elevated temperatures in the presence of a catalyst. The polyesters may also be subjected to solid state polymerization methods.

The second component of the present invention is a polyesteramide of the general formula:

A(N)ₓ(D)_{y}

where A is at least one dicarboxylic acid selected from aromatic or cycloaliphatic dicarboxylic acids having 8 to 14 carbon atoms or aliphatic dicarboxylic acids having 3 to 24 carbon atoms, N is at least one diamine having 2 to 24 carbon atoms, D is at least one diol having 2 to 14 carbon atoms, X is an integer from 0.01 to 0.99 and Y is an integer from 0.99 to 0.01. The most preferred range is for X to vary from 0.25 to 0.74 and Y to range from 0.74 to 0.25. The sum of X and Y is equal to 1.0.

A in this formula represents any of the dicarboxylic acids normally used in polyester and polyamide preparations. It is obvious to one skilled in the art that acid anhydrides, esters, and acid chlorides of these acids can be used to prepare these polyesteramides and are included in the term "dicarboxylic acid."

Suitable dicarboxylic acids are selected from the group consisting of aromatic dicarboxylic acids having 8 to 16 carbon atoms, aliphatic diacarboxylic acids having 3 to 12 carbon atoms and cycloaliphatic dicarboxylic acids having 8 to 12 carbon atoms.

The dicarboxylic acid component (A) of the polyesteramide may consist of one or more different dicarboxylic acids. Preferably the dicarboxylic acid is terephthalic acid, isophthalic acid, 1,4-cyclohexanedicarboxylic acid, 1,3-cyclohexanedicarboxylic acid, 2,6-naphthalene dicarboxylic acid, succinic acid, adipic acid, azelaic acid, sebacic acid, and the like.

The diol component (D) of the polyesteramide may consist of one or more different diols. D may be represented by, but not limited to, ethylene glycol, diethylene glycol, triethylene glycol, propane diol, 1,4-cyclohexanediol, 1,4-butanediol, 2,2-bis-(4-hydroxycyclohexane)-propane, 1,3-(2,2-dimethyl)propane diol, 1,4-cyclohexanedimethanol, 1,4-di-(hydroxyethoxy) benzene, hydroquinone, bisphenol A or any combination of these diols.

The diamine component (N) of the polyesteramide may consist of one or more different diamines. N may be represented by, but not limited to, ethylene diamine, propane diamine, butane diamine, hexane diamine, 1,4-cyclohexanediamine, 1,3-cyclohexane diamine, 1,4-phenylene diamine, methylene dianiline, 1,3-xylylene diamine, 1,3-(2,2-dimethyl)propane diamine, 1,4 and 1,3-cyclohexanebismethylamine, 1,4-xylylene diamine, bis(p-aminocyclohexyl)methane or any combination of these diamines.

By correctly balancing the stoichiometry the polyesteramide may be prepared using amino alcohols. These may be used without other diamines or diols or used in combination with the above described diamines and diols. These amino alcohols can be represented, but not limited to ethanol amine, 4-aminomethylcyclohexanemethanol, and 1-amino-3-hydroxy-2,2-dimethyl propane.

The diamine portion of the general structure shown above can also be incorporated via a reactive intermediate prepared by preforming a "monomeric" diamide. For example N,N'-p-carbomethoxybenzoylhexamethylene diamine can be used to prepare polyesteramides as described in G. Manzini, et. al, Eur. Polym J. 9, 941 (1973).

It is not necessary that the structure of the polyesteramide be limited to linear polymers. The use of multifunctional branching amines, carboxylic acids, or polyols will result in effective acetaldehyde reducing compositions as long as the resulting branched polymer can be effectively dispersed in the polyester. Thus polyols such as 1,1,1,-trimethylolpropane and pentaerythritol are useful as well as multifunctional amines such as tris(2-aminoethyl)amine and multifunctional carboxylic acids such as 1,3,5-benzene tricarboxylic acid. Hyperbranching units such as 3,5-diaminobenzoic acid can also be used to build effective acetaldehyde reducing structures.

The polyesteramides of the present invention do not show a significant molecular weight difference in their efficacy of reducing acetaldehyde in polyesters. This is in contrast to the performance of the polyamides described in U.S. 5,258,233 and 5,340,884. For example, polyesteramides ranging in molecular weight from 500-1,000,000 (number average) show excellent acetaldehyde reducing characteristics. It is obvious to those skilled in the art of blending polymers that solid polyesteramides ranging in number average molecular weight of 1,000 to 100,000 are preferred for ease of blend processing.

The polyesteramides can be prepared by any of the known techniques for polyesteramide synthesis. Acid chlorides can be reacted with mixtures of diamines and diols, low molecular weight dicarboxylic acid terminated polyesters can be reacted with diisocyanates, and conventional melt phase step-growth condensations of diacids, diamines, and diols or diesters, diols, and diamines can be employed. Aminolysis of polyesters with diamines, as described in U.S. Patent 4,606,449, can be used to prepare polyesteramides. Direct melt condensation of dicarboxylic acids, diamines, and diols is a preferred synthetic route.

The composition of the polyesteramide is controlled by the molar ratio of the diamine, diol, and dicarboxylic acid. This can be adjusted to control molecular weight or control the end group functionality. The order of addition of the reactants can also be used to change the structure of the polyesteramide. For example, an initial charge of ester and alcohol followed by addition of the diamine to the prepolymer can yield a "blocky" structure.

The polymers of this invention can be prepared in the presence or absence of a polycondensation catalyst. In the event that catalysts are used conventional polyester catalysts including, but not limited to, cobalt acetate, titanium isopropoxide, manganese acetate, antimony oxide, dibutyl tin diacetate.

The process for preparing the polyester/polyesteramide blends of the present invention involves preparing the polyester and polyesteramide, respectively, by processes as mentioned previously. The polyester and polyesteramide are dried in an atmosphere of dried air or dried nitrogen, or under reduced pressure. The polyester and polyesteramide are mixed and subsequently melt compounded, for example, in a single or twin screw extruder. Melt temperatures must be at least as high as the melting point of the polyester and are typically in the range of 260-310°C. Preferably, the melt compounding temperature is maintained as low as possible within said range. After completion of the melt compounding, the melt may be extruded in strand form and recovered according to the usual way such as cutting or it may be transferred to a machine suitable to form it directly into useful articles. Instead of melt compounding, the polyester and polyesteramide may be dry-blended and heat-molded or draw-formed into plastic articles.

The polyesteramide can be added in the late stages of polyester manufacture. For example, the polyesteramide can be blended with the molten polyester as it is removed from the polycondensation reactor, before it is pelletized. This method, however, is not desirable if the polyester/polyesteramide blend will be subjected to solid state polymerization since undesirable color and/or haze may develop during extended time at elevated temperatures. The polyesteramide may also be added as part of a polyolefin based nucleator concentrate where clarity is not critical such as in crystallized thermoformed articles.

The blends of this invention serve as excellent starting materials for the production of moldings of all types by extrusion or injection molding. Specific applications include various packaging applications such as thermoformed or injection molded trays, lids and cups; injection stretch blow-molded bottle and multilayer articles. Examples of package contents include, but are not limited to, food, beverages, and cosmetics.

Many other ingredients can be added to the compositions of the present invention to enhance the performance properties of the blends. For example, crystallization aids, impact modifiers, surface lubricants, denesting agents, stabilizers, antioxidants, ultraviolet light absorbing agents, metal deactivators, colorants such as titanium dioxide and carbon black, nucleating agents such as polyethylene and polypropylene, phosphate stabilizers, fillers, and the like, can be included herein. All of these additives and the use thereof are well known in the art and do not require extensive discussions. Therefore, only a limited number will be referred to, it being understood that any of these compounds can be used so long as they do not hinder the present invention from accomplishing its objects.

In applications where a clear, colorless resin is desired, the slight yellow color generated during processing can be masked by addition of a blue dye. The colorant can be added to either component of the blend during polymerization or added directly to the blend during compounding. If added during blending, the colorant can be added either in pure form or as a concentrate. The amount of a colorant depends on its absorptivity and the desired color for the particular application. A preferred colorant is 1-cyano-6-(4-(2-hydroxyethyl)anilino)-3-methyl-3H-dibenzo(F,I,J)-isoquinoline-2,7-dione used in an amount of from 2 to 15 ppm.

Desirable additives also include impact modifiers and antioxidants. Examples of typical commercially available impact modifiers well-known in the art and useful in this invention include ethylene/propylene terpolymers, styrene based block copolymers, and various acrylic core/shell type impact modifiers. The impact modifiers may be used in conventional amounts from 0.1 to 25 weight percent of the overall composition and preferably in amounts from 0.1 to 10 weight percent of the composition. Examples of typical commercially available antioxidants useful in this invention include, but are not limited to, hindered phenols, phosphites, diphosphites, polyphosphites, and mixtures thereof. Combinations of aromatic and aliphatic phosphite compounds may also be included.

The materials and testing procedures used for the results shown herein are as follows:

Polyester A is a copolyester consisting of 100 mole percent terephthalic acid, 98 to 99 mole percent ethylene glycol and 1 to 2 mole percent 1,4-cyclohexanedimethanol, having an I.V. of 0.76.

Haze was determined by ASTM D1003. Haze values of greater than 3.0% indicate visible haze.

Inherent viscosity (I.V.) was measured at 25°C using 0.50 grams of polymer per 100 ml of a solvent consisting of 60% by weight phenol and 40% by weight tetrachloroethane.

Number average molecular weights of the polyester were determined by size exclusion chromatography.

The following examples are presented to further illustrate this invention. All parts and percentages in the examples are on a weight basis unless otherwise stated.

### Examples

Example 1. A polyesteramide based on terephthalic acid (TPA), cyclohexanedimethanol (CHDM), and 50% mol % of cyclohexanedimethanolamine (CHBMA) was prepared by charging a polymerization reactor with TPA (83 g, 0.5 mol), CHDM (108 G, 0.75 mol) and 100 ppm of Ti catalyst as titanium isopropoxide. The mixture was placed into a 300°C metal bath and the CMBMA was added in equal portions at 30 minute intervals until a total charge of 35.5 g equivalent to 0.25 mol was added. The polymerization temperature was raised to 305°C and held for 40 minutes and then brought under vacuum (0.10 Torr) for 80 minutes. A light yellow semicrystalline polyesteramide was obtained. Molecular weight determination by size exclusion chromatography showed Mn = 11,060; Mw = 44,040; and MWD = 3.98. Elemental analysis and NMR analysis confirmed the expected composition based on the monomer feed.

Example 2. A polyesteramide based on TPA, CHDM, and 30 mol % m-xylylene diamine (MX) was prepared by charging a polymerization reactor with TPA (58.1 g, 0.35 mole), CHDM (108 g, 0.75 mol) and 100 ppm of Ti catalyst as titanium isopropoxide. The mixture was placed into a 300°C metal bath and a slurry of TPA and MX (24.9 g, 0.15 mol TPA, 20.4 g, 0.15 mol MX) was added in three separate additions at 30 minute intervals. The polymerization temperature was raised to 305°C and held for 40 minutes and then brought under vacuum (0.10 Torr) for 20 minutes. A yellowish semicrystalline solid was obtained. Molecular weight determination by size exclusion chromatography showed Mn = 10,700; Mw = 29,100; and MWD = 2.72. Elemental analysis and NMR analysis confirmed the expected composition based on the monomer feed.

Example 3. A polyesteramide based on TPA, CHDM, and 50 mol % of MX was prepared according to the procedure of Example 2 with the use of 50 mol % of MX rather than 30 mol%. A yellowish amorphous polyesteramide was obtained. Molecular weight determination by size exclusion chromatography showed Mn = 10,100; Mw = 66,030; and MWD = 6.52. Elemental analysis and NMR analysis confirmed the expected composition based on the monomer feed.

Example 4. A polyesteramide based on TPA, CHDM, and 30 mol % of 1,3-bis(aminomethyl)cyclohexane (BAC) was prepared according to the procedure of Example 2 with the use of 30 mol % of the BAC in place of the MX. A yellowish amorphous polyesteramide was obtained. Molecular weight determination by size exclusion chromatography showed Mn = 17,000; Mw = 95,800; and MWD = 5.63. Elemental analysis and NMR analysis confirmed the expected composition based on the monomer feed.

Example 5. A polyesteramide based on TPA, CHDM, and 30 mol % of PACM-20 was prepared by charging a polymerization reactor with TPA (83 g, 0.5 mole), CHDM (108 g, 0.75 mol), bis(p-aminocyclohexyl)methane (PACM-20, 31.5 g, 0.15 mol) and 100 ppm of Ti catalyst as titanium tetraisopropoxide. The mixture was purged with dry nitrogen and placed into a 300°C metal bath. A 90 min. condensation stage at 305°C was followed by 30 min at 305°C. The melt polymerization was held under vacuum of 0.21 Torr for 30 min. On cooling, a light yellow amorphous polymer was obtained with an IV of 0.661, Mn = 17,030; Mw = 40,800; and MWD = 2.39. Elemental analysis and NMR analysis confirmed the expected composition based on the monomer feed.

Example 6. A polyesteramide based on TPA, CHDM, and 50 mol % of PACM-20 was prepared according to the procedure of Example 5 with the use of 50 mol % of the diamine instead of 30 mol% as in Example 5. The resulting amorphous light-yellow colored polyesteramide had an IV of 0.855, Mn = 14,900; Mw = 62,960; and MWD = 3.79. Elemental analysis and NMR analysis were consistent with the monomer feed composition.

Example 7. A polyesteramide based on TPA, CHDM and 30 mol % of hexanediamine (HD) was prepared according to the procedure of Example 5 with the exception that 30 mol % of HD was used instead of the PACM-20. The clear yellowish melt was held under a vacuum of 0.28 Torr for 28 minutes. The molecular weight of the resulting semicrystalline polyesteramide was measured by size exclusion chromatography to give Mn = 13,800; Mw = 82,970; and MWD = 5.99. Elemental analysis and NMR analysis were consistent with the monomer feed composition.

Example 8. A polyesteramide based on TPA, CHDM and 50 mol % of HD was prepared according to the procedure of Example 5 with the exception that 50 mol % of HD was used. The clear slightly yellowish melt was held under a vacuum of 0.18 Torr for 8 minutes. The molecular weight of the resulting semicrystalline polyesteramide was measured by size exclusion chromatography to give Mn = 9,600; Mw = 38,230; and MWD = 3.98. Elemental analysis and NMR analysis were consistent with the monomer feed composition.

Example 9. A polyesteramide was prepared from N,N'-p-carbomethoxybenzoylhexamethylene diamine (33.0 g, 0.075 mol) (prepared according to G. Manzini, et al, Eur. Polym. J. 9, 941 (1973), dimethyl terephthalate (33.98 g, 0.325 mol) and CHDM (39.66 g, 0.275 mol). The polymerization was catalyzed with titanium tetraisopropoxide. It was started at 290°C for 90 min and then held for 80 min at 305°C under a vacuum of 0.10 Torr. The very light yellow semicrystalline polymer had an inherent viscosity of 0.725, Mn = 14,500; Mw = 34,200; and MWD = 2.35. Elemental analysis was consistent with the monomer feed composition.

Example 10. A polyesteramide based on 50 mol % TPA, 50 mol % IPA (isophthalic acid), CHDM and 50 mol % HD was prepared according to the procedure of Example 5. The molecular weight of the resulting polyesteramide was measured by size exclusion chromatography to give Mn = 20,300; Mw = 50,700; MWD = 2.50. Elemental analysis and NMR analysis were consistent with the monomer feed composition.

Example 11. A polyesteramide based on CHDA (1,4-cyclohexanedicarboxylic acid), CHDM and 50 mol % of HD was prepared according to the procedure of Example 5. The molecular weight of the resulting polyesteramide was measured by size exclusion chromatography to give Mn = 19,990; Mw = 51,100; MWD = 2.56. Elemental analysis and NMR analysis were consistent with the monomer feed composition.

Example 12. A polyesteramide based on TPA, CHDM and 50 mol % of 2-methylpentanediamine (MPD) was prepared according to the procedure of Example 5. The molecular weight of the resulting polyesteramide was measured by size exclusion chromatography to give Mn = 20,200; Mw = 51,400; MWD = 2.54. Elemental analysis and NMR analysis were consistent with the monomer feed composition.

Example 13. A polyesteramide based on 50 mol % TPA, 50 mol % CHDA, CHDM and 50 mol % HD was prepared according to the procedure of Example 5. The molecular weight of the resulting polyesteramide was measured by size exclusion chromatography to give Mn = 19,600; Mw = 51,300; MWD 2.62. Elemental analysis and NMR analysis were consistent with the monomer food composition.

### Examples 14-27. Compounding of PET with a polyesteramide.

A poly(ethylene terephthalate)/CHDM copolyester (Eastapak^{®} PET copolyester 9921W - 600 g) was dried at 150°C in air and a sample (6.0 g) of polyesteramide from Example 1 was dried at 100°C in a vacuum oven. The samples were physically mixed to give a 1 wt % sample of the polyesteramide in polyester A. The mixture was compounded on a Braebender at 275°C. After compounding, the sample was placed into a freezer to minimize loss of acetaldehyde by diffusion until the acetaldehyde content could be measured. PET/PEA compounds of Examples 16-27 were compounded in a similar fashion.

The color (b*) and acetaldehyde concentration for the compounded polymers were measured as follows.

Acetaldehyde generation (AA Gen) was determined by the following method. After crystallizing for 30 minutes at 180°C, the pelletized polyester was dried overnight at 120°C in a vacuum oven. A Tinius-Olsen melt indexer was loaded with 5 grams of the polyester and held at the test temperature for five minutes. The molten polyester was extruded into water and stored at a temperature of -40°C until grinding. The sample was ground to 20 mesh or finer and 0.5 grams was placed in a sample tube which was immediately sealed. The sample was analyzed by dynamic headspace gas chromatographic analysis using a Hewlett-Packard 5890 Gas Chromatograph with a Perkin Elmer Automatic Thermal Desorption ATD-50 as the injection system. Acetaldehyde was desorbed by heating the sample at 150°C for ten minutes. The gas chromatography column had a 30 m by 0.53 mm inside diameter.

Color was determined according to ASTM D2244 using a Hunter Color Lab instrument.

Table I compares the efficacy of acetaldehyde reduction and color generation for various polyesteramides with the polyamide of m-xylyene diamine and adipic acid a known effective acetaldehyde reducing additive.

**TABLE I.**

| **Acetaldehyde Results for PET Compounded Polyesteramides** | | | | |
|---|---|---|---|---|
| **Ex #** | **PE/PEA** | **Color (b*)** | **AA genertn (ppm)** | |
| | | | 275°C | 295°C |
| 14 | Polyester A (Control) | | 5.73 | 16.68 |
| 15 | Polyester A + 0.5% polyamide (1) | 11.49 | 1.99 | 8.46 |
| 16 | Polyester A + 0.5% PEA (2) from Ex. 1 | 7.47 | 1.68 | 4.84 |
| 17 | Polyester A + 1.0% PEA from Ex. 2 | 11.07 | 2.45 | 8.77 |
| 18 | Polyester A + 1.0% PEA from Ex. 3 | 12.55 | 1.16 | 5.11 |
| 19 | Polyester A + 1.0% PEA from Ex. 4 | 10.08 | 2.54 | 6.08 |
| 20 | Polyester A + 1.0% PEA from Ex. 5 | ** | 3.56 | 11.14 |
| 21 | Polyester A + 1.0% PEA from Ex. 6 | 9.55 | 1.89 | 4.35 |
| 22 | Polyester A + 1.0% PEA from Ex. 7 | 5.18 | 2.61 | 10.61 |
| 23 | Polyester A + 1.0% PEA from Ex. 8 | 5.42 | 1.98 | 5.58 |
| 24 | Polyester A + 1.0% PEA from Ex. 10 | 9.52 | 0.9 | 3.23 |
| 25 | Polyester A + 1.0% PEA from Example 11 | 10.16 | 2.91 | 13.22 |
| 26 | Polyester A + 1.0% PEA from Example 12 | 7.16 | 2.18 | 12.11 |
| 27 | Polyester A + 1.0% PEA from Example 13 | 10.21 | 1.70 | 6.07 |

| | | | | |
|---|---|---|---|---|
| (1) Polyamide based on m-xylylene diamine and adipic acid | | | | |
| (2) PEA = polyesteramide | | | | |

Example 14 shows the AA generated (5.73 ppm and 16.68 ppm) from the control polyester which contained no AA reducing scavengers. Example 15 is PET containing known AA scavengers and displayed reduced AA (1.99 ppm and 8.46). The polyester/polyesteramide of the present invention (Examples 16-27) all display greatly reduced AA which is generally at least as good or better than the polyesters containing the prior art AA scavengers. Moreover, the polyester/polyesteramides of the present invention display improved color as compared to Example 15.

Example 28-30 Compounding (PEN) with a polyesteramide. Poly(ethylene naphthalate) (PEN - 600 g) was dried at 150°C in air and a sample (6.0g) of polyesteramide prepared according to Example 10 was dried at 100°C in a vacuum oven. The samples were physically mixed to give a 1 wt% sample of the polyesteramide in PEN. The mixture was compounded on a Braebender extruder with the main heating zones at 305°C. After compounding the recovered sample was placed into a freezer to minimize loss of acetaldehyde by diffusion until the acetaldehyde could be measured. Acetaldehyde was measured according to the technique described below.

Acetaldehyde concentration after extrusion (Extrusion AA) was determined by grinding the pellets or sheet to 20 mesh or finer and measuring the acetaldehyde concentration by the same gas chromatographic method as described for acetaldehyde generation. The color was measured as described above. The results are shown in Table 2, below.

**TABLE 2:**

| Acetaldehyde Results for PEN Compounded Polyesteramides | | | |
|---|---|---|---|
| Ex. # | PE/PEA | color b* | AA extrusn (ppm) |
| 28 | PEN control | 7.91 | 16.09 |
| 29 | PEN + 1% PEA high IV (Ex. 10) | 8.05 | 3.3 |
| 30 | PEN + 1% PEA low IV (Ex. 10) | 8.84 | 2.39 |

As with the PET, the PEN/polyesteramide compositions of the present invention show greatly reduced AA (less than one quarter of the PEN control) with only very slight increases in the b* color.

## Claims

1. A clear composition comprising
A) a polyester which comprises a dicarboxylic acid component comprising repeat units from at least 85 mol % terephthalic acid, naphthalene- 2,6-dicarboxylic acid or mixtures of terephthalic acid and naphthalene-2,6-dicarboxylic acid and a diol component comprising repeat units from at least 85 mol % ethylene glycol, said mole percents being based on 100 mol % dicarboxylic acid and at least 100 mol % diol, and
B) a polyesteramide of the formula
A(N)ₓ(D)_{y}
where A is a dicarboxylic acid selected from aromatic or cycloaliphatic dicarboxylic acids having 8 to 14 carbon atoms or aliphatic dicarboxylic acids having 3 to 24 carbon atoms, N is a diamine having 2 to 24 carbon atoms, D is a diol having 2 to 14 carbon atoms, X is an integer from 0.01 to 0.99 and Y is an integer from 0.99 to 0.01
characterised in that the composition comprises 98-99.95 weight % of the polyester and 2-0.05 weight % of the polyester amide.

2. The composition of claim 1 wherein said dicarboxylic acid component further comprises at least one additional dicarboxylic acid selected from the group consisting of aromatic dicarboxylic acids having 4 to 12 carbon atoms and cycloaliphatic dicarboxylic acids having 8 to 12 carbon atoms.

3. The composition of claim 2 wherein said at least one additional dicarboxylic acid is selected from the group consisting of phthalic acid, isophthalic acid, naphthalene-2, 6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like.

4. A composition according to any preceding claim wherein said diol component further comprises at least one additional diol selected from the group consisting of cycloaliphtic diols having 6 to 20 carbon atoms or aliphatic diols having 3 to 20 carbon atoms.

5. The composition of claim 4 wherein said at least one additional diol is selected from the group consisting of diethylene glycol, triethylene glycol, 1,4-cyclohexanedimethanol, propane-1,3-diol, butane-1,2-diol, pentane-1,5-diol, hexane-1,6-diol, 3-methylpentanediol-(2,4) 2-methylpentanediol-(1,4), 2,2,4-trimethylpentane-diol-(1,3), 2-ethylhexanediol-(1,3), 2,2-diethylpropane-diol-(1,3), hexanediol(1,3), 1,4-di-(hydroxyethoxy)-benzene, 2,2-bis-4-hydroxy-cyclohexyl)-propane, 2, 4-dihydroxy-1,1,3,3-tetramethyl-cyclobutane, 2,2-bis-(3-hydroxyethoxyphenyl)-propane, and 2,2-bis-(4-hydroxypropoxyphenyl)-propane.

6. A composition according any preceding claim wherein said dicarboxylic acid of said polyesteramide is selected from the group consisting of terephthalic acid, isophthalic acid, 1,4-cyclohexanedicarboxylic acid, 1,3-cyclohexane-dicarboxylic acid, 2,6-naphthalene dicarboxylic acid, succinic acid, adipic acid, azelaic acid, sebacic acid and mixtures thereof, and/or said diol of said polyesteramide is selected from the group consisting of ethylene glycol, diethylene glycol, triethylene glycol, propane diol, 1,4-cyclohexanediol, 1,4-butanediol, 2,2-bis-(4-hydroxy-cyclohexane)-propane, 1,3-(2,2-dimethyl) propane diol, 1,4-cyclohexanedimethanol, 1,4-di-(hydroxyethoxy) benzene, hydroquinone, bisphenol A and mixtures thereof.

7. A composition according to any preceding claim wherein said diamine is selected from the group consisting of ethylene diamine, propane diamine, butane diamine, hexane diamine, 1,4-cyclohexanediamine, 1,3-cyclohexane diamine, 1,4-phenylene diamine, methylene dianiline, 1,3-xylylene diamine, 1,3-(2,2-dimethyl)propane diamine, 1,4 and 1,3-cyclohexanebismethylamine, 1,4-xylylene diamine, bis(p-aminocyclohexyl)methane and mixtures thereof.

8. A composition according to any preceding claim wherein said polyester has an I.V. of 0.5-1.0; said polyesteramide has a number average molecular weight of 1000-100,000, and wherein X is an integer from 0.25 to 0.74 and Y is an integer from 0.74 to 0.25.

9. An article selected from a molded article, beverage bottle, film or sheet comprising a composition according to any preceding claim.

## Patentansprüche

1. Klare Masse, umfassend:
A) einen Polyester, welcher eine Dicarbonsäurekomponente, umfassend Wiederholungseinheiten aus mindestens 85 Mol-% Terephthalsäure, Naphthalin-2,6-dicarbonsäure oder Mischungen von Terephthalsäure und Naphthalin-2,6-dicarbonsäure, und eine Diolkomponente, umfassend Wiederholungseinheiten aus mindestens 85 Mol-% Ethylenglykol, umfaßt, wobei die Molprozente auf 100 Mol-% Dicarbonsäure und mindestens 100 Mol-% Diol bezogen sind, und
B) ein Polyesteramid der Formel
A(N)ₓ (D)_{y}
worin A eine Dicarbonsäure ist, ausgewählt aus aromatischen oder cycloaliphatischen Dicarbonsäuren mit 8 bis 14 Kohlenstoffatomcn oder aliphatischen Dicarbonsäuren mit 3 bis 24 Kohlenstoffatomen, N ein Diamin mit 2 bis 24 Kohlenstoffatomen ist, D ein Diol mit 2 bis 14 Kohlenstoffatomen ist, X eine ganze Zahl von 0,01 bis 0,99 ist und Y eine ganze Zahl von 0,99 bis 0,01 ist,
dadurch gekennzeichnet, daß die Masse 98 - 99,95 Gew.-% des Polyesters und 2 - 0,05 Gew.-% des Polyesteramids umfaßt.

2. Masse gemäß Anspruch 1, wobei die Dicarbonsäurekomponente weiterhin mindestens eine zusätzliche Dicarbonsäure, ausgewählt aus der Gruppe bestehend aus aromatischen Dicarbonsäuren mit 4 bis 12 Kohlenstoffatomen und cycloaliphatischen Dicarbonsäuren mit 8 bis 12 Kohlenstoffatomen, umfaßt.

3. Masse gemäß Anspruch 2, wobei die mindestens eine zusätzliche Dicarbonsäure ausgewählt ist aus der Gruppe bestehend aus Phthalsäure, Isophthalsäure, Naphthalin-2,6-dicarbonsäure, Cyclohexandicarbonsäure, Cyclohcxandicssigsäure, Diphenyl-4,4'-dicarbonsäure, Bernsteinsäure, Glutarsäure, Adipinsäure, Azelainsäure, Sebacinsäure und dergleichen.

4. Masse gemäß mindestens einem der vorhergehenden Ansprüche, wobei die Diolkomponente weiterhin mindestens ein zusätzliches Diol, ausgewählt aus der Gruppe bestehend aus cycloaliphatischen Diolen mit 6 bis 20 Kohlenstoffatomen oder aliphatischen Diolen mit 3 bis 20 Kohlenstoffatomen, umfaßt.

5. Masse gemäß Anspruch 4, wobei das mindestens eine zusätzliche Diol ausgewählt ist aus der Gruppe bestehend aus Diethylenglykol, Triethylenglykol, 1,4-Cyclohexandimethanol, Propan-1,3-diol, Butan-1,2-diol, Pentan- 1,5-diol, Hexan-1,6-diol, 3-Methylpentandiol-(2,4), 2-Methylpentandiol-(1,4), 2,2,4-Trimethylpentan-diol-(1,3), 2-Ethylhexandiol-(1,3), 2,2-Diethylpropandiol-(1,3), Hexandiol-(1,3), 1,4-Di-(hydroxyethoxy)-benzol, 2,2-Bis-4-hydroxycyclohexyl)-propan, 2,4-Dihydroxy-1,1,3,3-tetramethylcyclobutan, 2,2-Bis-(3-hydroxyethoxyphenyl)-propan und 2,2-Bis-(4-hydroxypropoxyphenyl)-propan.

6. Masse gemäß mindestens einem der vorgehenden Ansprüche, wobei die Dicarbonsäure des Polyesteramids ausgewählt ist aus der Gruppe bestehend aus Terephthalsäure, Isophthalsäure, 1,4-Cyclohexandicarbonsäure, 1,3-Cyclohexandicarbonsäure, 2,6-Naphthalindicarbonsäure, Bernsteinsäure, Adipinsäure, Azelainsäure, Sebacinsäure und Mischungen davon und/oder das Diol des Polyesteramids ausgewählt ist aus der Gruppe bestehend aus Ethylenglykol, Diethylenglykol, Triethylenglykol, Propandiol, 1,4-Cyclohexandiol, 1,4-Butandiol, 2,2-Bis-(4-hydroxycyclohexan)-propan, 1,3-(2,2-Dimethyl)-propandiol, 1,4-Cyclohexandimethanol, 1,4-Di-(hydroxyethoxy)benzol, Hydrochinon, Bisphenol A und Mischungen davon.

7. Masse gemäß mindestens einem der vorhergehenden Ansprüche, wobei das Diamin ausgewählt ist aus der Gruppe bestehend aus Ethylendiamin, Propandiamin, Butandiamin, Hexandiamin, 1,4-Cyclohexandiamin, 1,3-Cyclohexandiamin, 1,4-Phenylendiamin, Methylendianilin, 1,3-Xylylendiamin, 1,3-(2,2-Dimethyl)-propandiamin, 1,4- und 1,3-Cyclohexanbismethylamin, 1,4-Xylylendiamin, Bis(p-aminocyclohexyl)-methan und Mischungen davon.

8. Masse gemäß mindestens einem der vorhergehenden Ansprüche, wobei der Polyester eine I.V. von 0,5 - 1,0 aufweist; das Polyesteramid ein zahlenmittleres Molekulargewicht von 1000 - 100 000 besitzt, und wobei X eine ganze Zahl von 0,25 bis 0,74 ist und Y eine ganze Zahl von 0,74 bis 0,25 ist.

9. Artikel, ausgewählt aus einem Formartikel, einer Getränkeflasche, einer Folie oder einer Tafel, umfassend eine Masse gemäß mindestens einem der vorhergehenden Ansprüche.

## Revendications

1. Composition limpide comprenant :
A) un polyester qui comprend un composant acide dicarboxylique comprenant des unités répétées d'au moins 85 mol% d'acide téréphtalique, d'acide naphtalène-2,6-dicarboxylique ou de mélanges d'acide téréphtalique et d'acide naphtalène-2,6-dicarboxylique et un composant diol comprenant des unités répétées d'au moins 85 mol% d'éthylèneglycol, lesdits pourcentages molaires étant basés sur 100 mol% d'acide dicarboxylique et au moins 100 mol% de diol, et
B) un polyesteramide de formule
A(N)ₓ(D)_{y}
où A est un acide dicarboxylique choisi parmi les acides dicarboxyliques aromatiques ou cycloaliphatiques ayant 8 à 14 atomes de carbone ou les acides dicarboxyliques aliphatiques ayant 3 à 24 atomes de carbone, N est une diamine ayant 2 à 24 atomes de carbone, D est un diol ayant 2 à 14 atomes de carbone, x est un entier de 0,01 à 0,99 et y est un entier de 0,99 à 0,01,
caractérisée en ce que la composition comprend 98-99,95 % en masse de polyester et 2-0,05 % en masse de polyesteramide.

2. Composition selon la revendication 1 où ledit composant acide dicarboxylique comprend en outre au moins un acide dicarboxylique supplémentaire choisi dans le groupe consistant en les acides dicarboxyliques aromatiques ayant 4 à 12 atomes de carbone et les acides dicarboxyliques cycloaliphatiques ayant 8 à 12 atomes de carbone.

3. Composition selon la revendication 2 où ledit ou lesdits acides dicarboxyliques supplémentaires est ou sont choisis dans le groupe consistant en l'acide phtalique, l'acide isophtalique, l'acide naphtalène-2,6-dicarboxylique, l'acide cyclohexanedicarboxylique, l'acide cyclohexanediacétique, l'acide diphényl-4,4'-dicarboxylique, l'acide succinique, l'acide glutarique, l'acide adipique, l'acide azélaïque, l'acide sébacique et analogues.

4. Composition selon l'une quelconque des revendications précédentes, où ledit composant diol comprend en outre au moins un diol supplémentaire choisi dans le groupe consistant en les diols cycloaliphatiques ayant 6 à 20 atomes de carbone et les diols aliphatiques ayant 3 à 20 atomes de carbone.

5. Composition selon la revendication 4 où ledit ou lesdits diols supplémentaires est ou sont choisis dans le groupe consistant en le diéthylèneglycol, le triéthylèneglycol, le cyclohexane-1,4-diméthanol, le propane-1,3-diol, le butane-1,2-diol, le pentane-1,5-diol, l'hexane-1,6-diol, le 3-méthylpentane-2,4-diol, le 2-méthylpentane-1,4-diol, le 2,2,4-triméthylpentane-1,3-diol, le 2-éthylhexane-1,3-diol, le 2,2-diéthylpropane-1,3-diol, l'hexane-1,3-diol, le 1,4-di-(hydroxyéthoxy)-benzène, le 2,2-bis-(4-hydroxycyclohexyl)-propane, le 2,4-dihydroxy-1,1,3,3-tétraméthyl-cyclobutane, le 2,2-bis-(3-hydroxyéthoxyphényl)-propane et le 2,2-bis-(4-hydroxypropoxyphényl)-propane.

6. Composition selon l'une quelconque des revendications précédentes, où ledit acide dicarboxylique dudit polyesteramide est choisi dans le groupe consistant en l'acide téréphtalique, l'acide isophtalique, l'acide cyclohexane-1,4-dicarboxylique, l'acide cyclohexane-1,3-dicarboxylique, l'acide naphtalène-2,6-dicarboxylique, l'acide succinique, l'acide adipique, l'acide azélaïque, l'acide sébacique et leurs mélanges, et/ou ledit diol dudit polyesteramide est choisi dans le groupe consistant en l'éthylèneglycol, le diéthylèneglycol, le triéthylèneglycol, le propanediol, le cyclohexane-1,4-diol, le butane-1,4-diol, le 2,2-bis-(4-hydroxycyclohexane)-propane, le 1,3-(2,2-diméthyl)propanediol, le cyclohexane-1,4-diméthanol, le 1,4-di-(hydroxyéthoxy)benzène, l'hydroquinone, le bisphénol A et leurs mélanges.

7. Composition selon l'une quelconque des revendications précédentes où ladite diamine est choisie dans le groupe consistant en l'éthylènediamine, la propanediamine, la butanediamine l'hexanediamine, la cyclohexane-1,4-diamine, la cyclohexane-1,3-diamine, la phénylène-1,4-diamine, la méthylènedianiline, la xylylène-1,3-diamine, la 1,3-(2,2-diméthyl)propanediamine, la cyclohexane-1,4- et 1,3-bisméthylamine, la xylylène-1,4-diamine, le bis(p-aminocyclohexyl)méthane et leurs mélanges.

8. Composition selon l'une quelconque des revendications précédentes, où ledit polyester a une V.I. de 0,5-1,0, ledit polyesteramide a une masse moléculaire moyenne en nombre de 1 000-100 000 et où x est un entier de 0,25 à 0,74 et y est un entier de 0,74 à 0,25.

9. Produit choisi parmi un produit moulé, une bouteille pour boissons, un film et une feuille comprenant une composition selon l'une quelconque des revendications précédentes.
